# DEMANDE DE BREVET EUROPEEN

(11) **EP 1 808 633 A1**
(43) Date de publication de la demande: **18.07.2007**
(21) Numéro de dépôt: 06300025.1
(22) Date de dépôt: 12.01.2006
(51) Int. Cl.: F16L 19/02

(54) **Raccord fileté basse pression à vissage manuel pour détendeur de gaz ou analogue**

(71) Demandeur: FRO S.p.A., 37135 Verone (IT); L'AIR LIQUIDE, Société Anonyme pour l'Etude et l'Exploitation des Procédés Georges Claude, 75007 Paris (FR)
(72) Inventeur: Bendazzoli, Silvano, 37134 Verone (IT); Moretti, Alessandro, 25127 Brescia (IT); Arzenton, Marco, 37128 Verone (IT); Cannet, Gilles, 95620 Parmain (FR)
(74) Mandataire: Pittis, Olivier

(57) **Abrégé**

L'invention porte sur un raccord (1) fileté à vissage manuel comprenant un corps (11) d'axe (AA) avec un passage (12) axial pour véhiculer un fluide sous pression et une portion filetée (15). Le raccord fileté de l'invention est conçu pour les basses pressions de gaz, permet une bonne étanchéité de raccordement et ne nécessite pas d'outil pour sa fixation. Il est de dimensions choisies aussi faibles que possible mais permettant une manoeuvrabilité aisée par l'opérateur. Le raccord de l'invention est utilisable pour réaliser le raccordement d'une canalisation de gaz à basse pression à un dispositif de fourniture de gaz, tel un raccord de sortie d'un détendeur ou robinet-détendeur de gaz, ou un dispositif consommateur de gaz, tel un chalumeau de soudage, coupage ou analogue.

## Description

L'invention concerne un raccord fileté pour basse pression de gaz à vissage manuel.

Le raccordement d'une canalisation de gaz à basse pression à un dispositif de fourniture de gaz, tel un raccord de sortie d'un détendeur ou robinet-détendeur de gaz, ou un dispositif consommateur de gaz, tel un chalumeau de soudage, coupage ou analogue, se fait classiquement au moyen d'un raccord fileté.

Or, les raccords filetés actuels destinés à être utilisés sur des canalisations à basse pression, c'est-à-dire jusqu'à 20 bars maximum, pour répondre à la norme EN 560, doivent être conçus pour assurer une étanchéité métal/métal.

Pour cette raison, il est actuellement indispensable d'opérer un serrage mécanique, c'est-à-dire à l'aide d'un outil adapté, tel une clé de serrage, du raccord fileté sur l'appareil auquel il doit être raccordé de manière étanche.

Cependant, l'utilisation d'un tel outil pose problème.

En effet, lorsqu'on réalise le serrage d'un raccord fileté avec un outil, il est difficile de bien contrôler le couple de serrage appliqué, ce qui peut engendrer :
- soit une mauvaise étanchéité et des fuites lorsque le serrage est insuffisant,
- soit une détérioration possible du filetage et donc de la connexion si le serrage est trop important. Cette détérioration du raccord peut être rapide, surtout si les opérations de serrage/desserrage sont fréquentes, en particulier lorsqu'il est utilisé en association avec un robinet-détendeur de gaz car, dans ce cas, il est obligatoire de découpler le raccord lors de chaque changement de la bouteille de gaz équipée dudit robinet-détendeur, puis de le recoupler ensuite.

Par ailleurs, les contraintes de place engendrées par les capotages ou chapeaux de protection protégeant habituellement les robinets de distribution de gaz, tel celui décrit par EP-A-747796, empêchent parfois de réaliser un serrage correct du raccord avec un tel outil de serrage.

En effet, du fait du faible espacement disponible, le serrage par un outil s'avère souvent difficile ou non totalement efficace, ce qui conduit là encore, à des problèmes d'étanchéité et/ou de détérioration du filetage.

Le problème qui se pose dans ce contexte est de proposer un raccord fileté conçu pour les basses pressions de gaz, conforme à la norme EN560, permettant une bonne étanchéité de raccordement et ne nécessitant pas d'outil pour sa fixation, de dimensions aussi faibles que possibles mais dont la manoeuvrabilité par l'opérateur soit néanmoins aisée, de manière à pallier les problèmes et à éviter les inconvénients susmentionnés.

La solution est alors un raccord fileté comprenant un corps d'axe A-A avec un passage axial pour véhiculer un fluide sous pression et une portion filetée, caractérisé en ce qu'il comporte, en outre, une partie amont de diamètre d et de longueur 1, et une partie aval de diamètre D et de longueur L telles que :
- 15mm ≤ d ≤40 mm et 25 mm ≤ D ≤ 55 mm, avec d < D, et
- 12 mm ≤ l ≤ 30 mm et 8 mm ≤ L ≤ 30 mm, avec ≥ L.

Le choix particulier des dimensions du raccord de l'invention est primordial car il permet de résoudre les problèmes ci-avant, ce qui ne serait pas possible avec un raccord analogue mais de dimensions différentes.

Selon le cas, le raccord de l'invention peut comprendre l'une ou plusieurs des caractéristiques suivantes :
- le corps est formé de laiton, d'aluminium ou d'un alliage d'aluminium, ou un alliage de zinc, tel le Zamac.
- avantageusement, le dimensionnement du raccord est tel que : 20mm ≤ d ≤ 30 mm, et/ou 30mm ≤ D ≤ 45 mm, et/ou 12 mm ≤ L ≤ 20 mm et/ou 12 mm ≤ l ≤ 25 mm.
- la partie amont de diamètre d et de longueur I est de forme cylindrique, et/ou la partie aval de diamètre D et de longueur L est de forme cylindrique, de préférence les parties amont et aval cylindriques sont solidaires et consécutives l'une de l'autre.
- le passage du corps comporte un évidement coaxial au passage, du côté de l'embouchure dudit passage au niveau de la partie amont du corps.
- la partie aval comporte une surface externe conformée et/ou usinée pour permettre sa manoeuvre manuelle en rotation autour de l'axe A-A par un utilisateur.
- il comporte, en outre, une pièce oblongue, comportant un perçage axial, insérée dans au moins une partie du passage axial du corps et faisant saillie à l'extérieur dudit corps du côté de la partie aval dudit corps, ladite pièce oblongue étant libre en rotation par rapport audit corps au sein dudit passage axial.
- la pièce oblongue comprend une première extrémité située à l'intérieur du passage axial du corps et au niveau de la partie amont du corps, et une seconde extrémité faisant saillie du côté de la partie aval.
- la première extrémité de la pièce oblongue comporte un logement au sein duquel est agencé un joint d'étanchéité.
- la première extrémité de la pièce oblongue comporte, en outre, un épaulement périphérique venant en butée contre un siège aménagé dans la paroi périphérique interne du passage axial du corps, lorsque la pièce oblongue est positionnée à l'intérieur du passage axial.
- la seconde extrémité de la pièce oblongue faisant saillie du côté de la partie aval comporte un élément ou une portion coudée avec un passage pour le fluide communiquant avec le passage interne de ladite pièce.

L'invention va être mieux comprise grâce à la description détaillée qui va suivre faite en références aux Figures illustratives annexées donnant des exemples possibles de réalisation d'un raccord selon l'invention.

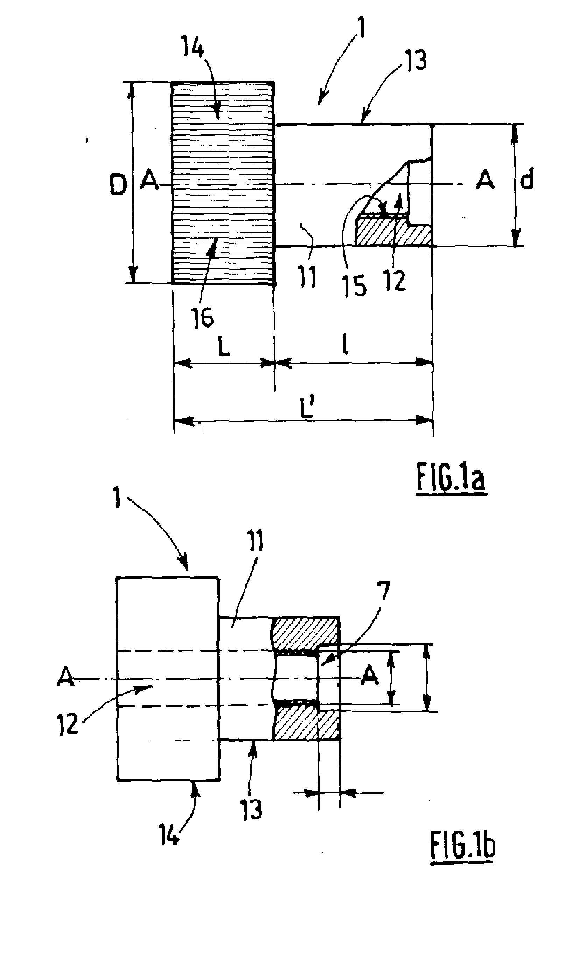

La Figure 1 représente un raccord 1 fileté selon l'invention dont le corps 11 d'axe A-A est percé d'un passage 12 axial de manière à pouvoir y véhiculer un fluide sous pression, en particulier un gaz à basse pression, lorsque le raccord 1 est vissé, via un filetage ou taraudage présent sur une portion filetée 15 dudit corps 11, sur par exemple le raccord de sortie de forme complémentaire d'un robinet de distribution de gaz.

Ce raccord 1 se compose ici d'une partie amont 13, de forme cylindrique, de diamètre d et de longueur l, immédiatement suivie d'une partie aval 14, également cylindrique, de diamètre D et de longueur, avec d < D et l ≥ L, les valeurs spécifiques de ces grandeurs étant données dans le Tableau suivant.

**Tableau**

| | Valeur minimum (en mm) | Valeur maximum (en mm) |
|---|---|---|
| D | 25 | 55 |
| d | 15 | 40 |
| L | 8 | 30 |
| l | 12 | 30 |

De préférence, la longueur totale L' du raccord 1 est telle que:
20 ≤ L' ≤ 60 avec L' = L + I (cf. Fig. 1a).

En outre, comme illustré en Figure 1b, le passage 12 du corps 11 comporte un évidement 7 coaxial au passage 12, du côté de l'embouchure dudit passage 12 au niveau de la partie amont 13 du corps 11. Cet évidement 7 a un diamètre égal au diamètre nominal du filetage, dans sa tolérance supérieure, par exemple 12 mm pour un raccord M 12x1, 16mm pour un raccord M16x1,5... et une longueur égale à au moins une fois le pas du filetage minimum, par exemple >1 mm pour un raccord M12x1 , >1,5 mm pour un raccord 16x1,5 ...

Cet évidement 7 sert à améliorer et à faciliter la connexion du raccord 1 sur un raccord de sortie complémentaire, tel celui d'un robinet de distribution de gaz. Il protège également l'entrée du filet taraudé dans le raccord en l'éloignant de l'extrémité du raccord qui est exposée aux chocs et aux salissures. De plus, il donne un réel confort de connexion à l'utilisateur, en particulier pour les pas à gauche qui demandent une manoeuvre un peu inhabituelle.

Afin de permettre une manipulation plus aisée en rotation autour de l'axe A-A de la partie aval 14 par un utilisateur, celle-ci comporte une surface externe 16 conformée et/ou usinée de manière à lui conférer une rugosité, une structure et/ou une forme lui conférant une bonne adhérence.

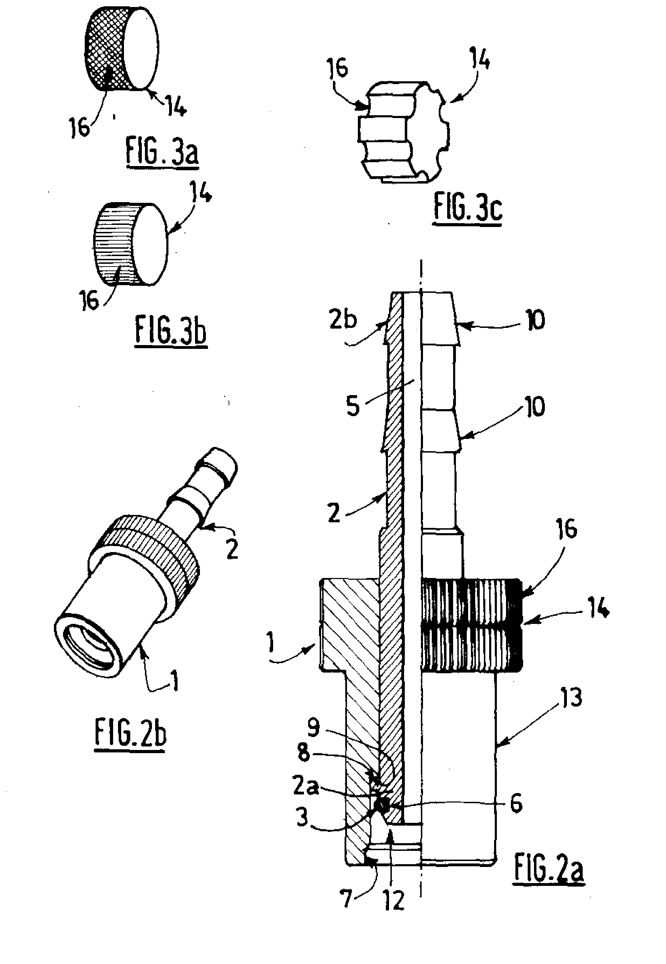

Des exemples d'usinages de cette surface externe 16 sont schématisés sur les figures 3a à 3c. La figure 3a représente une surface à moletage croisé et la figure 3b un moletage droit. Les deux types de stries sont aisément réalisés par tournage. Ce type de surface permet un serrage à pleine main. La figure 3c représente une partie aval 14 cannelée qui offre une bonne prise aux extrémités des doigts s'appuyant sur les arrêtes des cannelures. La partie en saillie des cannelures peut d'ailleurs être moletée, ce qui rend alors les deux modes de préhension efficaces. Un tel raccord cannelé peut être usiné dans une barre cannelée élaborée par filage, étirage ou extrusion par exemple.

Cet usinage de surface 16 permet de lui conférer une bonne manoeuvrabilité par l'opérateur en permettant sa rotation manuelle aisée par application d'un couple suffisant à une bonne tenue par application d'une force minimum, même lorsque l'opérateur est muni de gants.

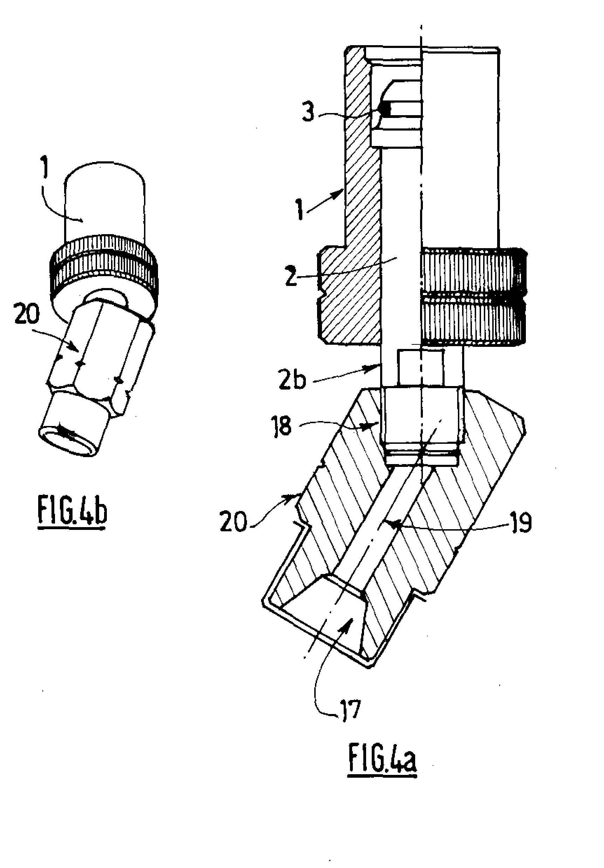

Pour les raccords destinés à être utilisés avec des gaz combustibles, donc dotés d'un pas à gauche, l'usinage de la surface 16 peut utilement être complété par une saignée de repérage centrée sur la dite surface comme représenté en figure 2a, 2b, 4a et 4b.

Cette saignée permet de distinguer les raccords à « oxygène » des raccords à « acétylène » dans une installation de soudage ou coupage oxyacéthylénique par exemple.

Dans le même esprit d'identification aisée, le raccord ou sa surface 16 peut être coloré par un traitement approprié, par exemple en rouge pour les raccords de gaz combustible et en bleu pour les raccords d'oxygène.

Par ailleurs, pour permettre une évacuation du fluide vers une canalisation de fluide, telle une canalisation de gaz flexible d'un chalumeau de soudage ou coupage, le raccord 1 de l'invention est doté d'une pièce oblongue 2 , comme illustré sur les Figures 2a et 2b.

La pièce oblongue 2 comporte un perçage axial 5 pour véhiculer le fluide sous pression, tel un gaz, et est de forme générale cylindrique ou tubulaire.

La pièce oblongue 2 comprend une première extrémité 2a située à l'intérieur du passage axial 12 du corps 11 et au niveau de la partie amont 13 de celui-ci, et une seconde extrémité 2b faisant saillie hors du raccord 1, du côté de la partie aval 14.

Autrement dit, la pièce 2 oblongue est partiellement insérée, via sa première extrémité 2a, à l'intérieur du passage 12 axial du corps 11 du raccord 1 tout en faisant saillie à l'extérieur dudit corps 11 du côté de la partie aval 14 du raccord, via sa deuxième extrémité 2b.

Par ailleurs, la pièce oblongue 2 est libre en rotation au sein dudit passage axial 12, par rapport audit corps 1 de raccord.

Toutefois, afin de permettre un maintien en position de la pièce 2 dans le corps 11 de raccord 1, on prévoit, sur la périphérie externe de la première extrémité 2a de la pièce oblongue 2, un épaulement périphérique 9 venant en butée contre un siège 8 aménagé dans la paroi périphérique interne du passage 12 axial du corps 11, lorsque la pièce oblongue 2 est positionnée à l'intérieur dudit passage axial 12.

Autrement dit, l'épaulement 9 vient coopérer avec le siège 8 en venant appuyer mécaniquement sur celui-ci pour retenir la pièce 2 dans le passage 12.

Afin d'assurer l'étanchéité fluidique de l'ensemble, la première extrémité 2a de la pièce oblongue 2 comporte un logement 6 au sein duquel est agencé un joint d'étanchéité 3, tel un joint torique, comme visible sur la Figure 2a. Ce logement 6 est positionné entre l'épaulement 9 et la partie terminale de la première extrémité 2a de la pièce oblongue 2.

Par ailleurs, la deuxième extrémité 2b de la pièce oblongue 2 comprend des portions successives 10 externes de formes tronconiques permettant d'obtenir une bonne retenue d'une canalisation de fluide flexible emmanchée sur cette deuxième extrémité 2b.

Les Figures 4a et 4b montrent un second mode de réalisation, dans lequel la deuxième extrémité 2b de la pièce oblongue 2 faisant saillie du côté de la partie aval comporte un élément coudé ou une portion coudée 20 pouvant être orienté selon plusieurs angles possibles et comprenant un passage interne 19 pour le gaz communiquant avec le passage 5 interne de la pièce 2.

Cet élément 20 coudé est par exemple adapté pour recevoir un dispositif anti-retour pare-flamme, couramment appelé dispositif ARPF, à son extrémité libre 17.

L'angle du coude est déterminé pour que le tuyau fixé au raccord retombe plus ou moins tangentiellement à la bouteille de gaz sans se plier, pour éviter usure et perte de charge.

Si un dispositif anti-retour pare-flamme (ARPF) est monté sur le raccord coudé, l'angle est déterminé aussi pour que l'ARPF dépasse le moins possible de l'enveloppe de la bouteille (encombrement, exposition aux chocs ...) et ne touche pas la bouteille ou son chapeau de protection, n'empêche pas de fixer le raccord.

En fait, c'est le couple longueur horizontale /angle du coude qu'il faut prendre en considération pour l'encombrement.

Grâce au coude que présente cet élément 20, on peut réduire l'encombrement de l'ensemble, ce qui présente les avantages de diminuer la vulnérabilité de l'ensemble en cas de choc latéral puisque l'ensemble est dès lors plus compact et d'augmenter la stabilité d'une bouteille de gaz qui en est équipée car le barycentre sera positionné davantage vers l'axe de la bouteille.

Le raccord de l'invention peut être fabriqué avantageusement en un laiton contenant préférentiellement moins de 70 à 80% de cuivre du fait de sa bonne usinabilité et de son coût raisonnable, mais peut aussi être fabriqué en aluminium ou en un alliage d'aluminium ou en tout autre matériau compatible avec le gaz qui sera véhiculé par le raccord.

Par ailleurs, le filetage à proprement parler peut être rapporté sous forme d'un insert en métal ou en un autre matériau dur et offrant un bon coefficient de frottement, le reste du corps de raccord demeurant en matériau plus léger et/ou plus économique. Ainsi, on peut imaginer réaliser un raccord composite formé d'un corps en Zamac injecté, voire en polymère, ou en un autre matériau de bas coût analogue mais pas très durable au vissage, et d'un filet rapporté en matériau plus résistant à l'usure, par exemple du genre "ressort".

## Revendications

1. Raccord (1) fileté comprenant un corps (11) d'axe (AA) avec un passage (12) axial pour véhiculer un fluide sous pression et une portion filetée (15), **caractérisé en ce qu'**il comporte, en outre, une partie amont (13) de diamètre (d) et de longueur (I), et une partie aval (14) de diamètre (D) et de longueur (L) telles que :
. 15 mm ≤ d ≤ 40 mm et 25 mm ≤ D ≤ 55 mm, avec d < D, et
. 12mm ≤ l ≤ 30mm et 8 mm ≤ L ≤ 30mm, avec l ≥ L.

2. Raccord selon la revendication 1, **caractérisé en ce que** :
- 20mm ≤ d ≤ 30 mm et/ou
- 30mm ≤ D ≤ 45 mm, et/ou
- 12 mm ≤ L ≤ 20 mm et/ou
- 12 mm ≤ l ≤ 25 mm.

3. Raccord selon l'une des revendications 1 ou 2, **caractérisé en ce que** la partie amont (13) de diamètre (d) et de longueur (I) est de forme cylindrique, et/ou la partie aval (14) de diamètre (D) et de longueur (L) est de forme cylindrique, de préférence les parties amont (13) et aval (14) cylindriques sont solidaires et consécutives l'une de l'autre.

4. Raccord selon l'une des revendications 1 à 3, **caractérisé en ce que** le passage (12) du corps (11) comporte un évidement (7) coaxial au passage (12), du côté de l'embouchure dudit passage (12) au niveau de la partie amont (13) du corps (11).

5. Raccord selon l'une des revendications 1 à 4, **caractérisé en ce que** la partie aval (14) comporte une surface externe (16) conformée et/ou usinée pour permettre sa manoeuvre manuelle en rotation autour de l'axe (AA) par un utilisateur.

6. Raccord selon l'une des revendications 1 à 5, **caractérisé en ce qu'**il comporte, en outre, une pièce oblongue (2), comportant un perçage axial (5), insérée dans au moins une partie du passage (12) axial du corps (11) et faisant saillie à l'extérieur dudit corps (11) du côté de la partie aval (14) dudit corps (11), ladite pièce oblongue (2) étant libre en rotation par rapport audit corps (1) au sein dudit passage axial (12).

7. Raccord selon la revendication 6, **caractérisé en ce que** la pièce oblongue (2) comprend une première extrémité (2a) située à l'intérieur du passage axial (12) du corps (11) et au niveau de la partie amont (13) dudit corps (11), et une seconde extrémité (2b) faisant saillie du côté de la partie aval (14).

8. Raccord selon les revendications 6 ou 7, **caractérisé en ce que** la première extrémité (2a) de la pièce oblongue (2) comporte un logement (6) au sein duquel est agencé un joint d'étanchéité (3).

9. Raccord selon les revendications 6 à 8, **caractérisé en ce que** la première extrémité (2a) de la pièce oblongue (2) comporte, en outre, un épaulement périphérique (9) venant en butée contre un siège (8) aménagé dans la paroi périphérique interne du passage (12) axial du corps, lorsque la pièce oblongue (2) est positionnée à l'intérieur dudit passage axial (12).

10. Raccord selon l'une des revendications 6 à 9, **caractérisé en ce que** la seconde extrémité (2b) de la pièce oblongue (2) faisant saillie du côté de la partie aval (14) comporte un élément ou une portion coudée (20) avec un passage (19) pour le fluide communiquant avec le passage (5) interne de ladite pièce (2).

## Revendications modifiées

### Revendications modifiées conformément à la règle 86(2) CBE.

**1.** Raccord (1) fileté comprenant un corps (11) d'axe (AA) avec un passage (12) axial pour véhiculer un fluide sous pression et une portion filetée (15), **caractérisé en ce qu'**il comporte, en outre, une partie amont (13) de diamètre (d) et de longueur (I), et une partie aval (14) de diamètre (D) et de longueur (L) telles que :
. 15 mm ≤ d ≤ 40 mm et 25 mm ≤ D ≤ 55 mm, avec d < D, et
. 12 mm ≤ l ≤ 30 mm et 8 mm ≤ L ≤ 30 mm, avec l ≥ L,
et **en ce que** le passage (12) du corps (11) comporte un évidement (7) coaxial au passage (12), de diamètre inférieur ou égal au diamètre nominal de la portion filetée (15), du côté de l'embouchure dudit passage (12) au niveau de la partie amont (13) du corps (11).

**2.** Raccord selon la revendication 1, **caractérisé en ce que** :
- 20mm ≤ d ≤ 30 mm et/ou
- 30mm ≤ D ≤ 45 mm, et/ou
- 12 mm ≤ L ≤ 20 mm et/ou
- 12 mm ≤ 1 ≤ 25 mm.

**3.** Raccord selon l'une des revendications 1 ou 2, **caractérisé en ce que** la partie amont (13) de diamètre (d) et de longueur (I) est de forme cylindrique, et/ou la partie aval (14) de diamètre (D) et de longueur (L) est de forme cylindrique, de préférence les parties amont (13) et aval (14) cylindriques sont solidaires et consécutives l'une de l'autre.

**4.** Raccord selon l'une des revendications 1 à 3, **caractérisé en ce que** la partie aval (14) comporte une surface externe (16) conformée et/ou usinée pour permettre sa manoeuvre manuelle en rotation autour de l'axe (AA) par un utilisateur.

**5.** Raccord selon l'une des revendications 1 à 4, **caractérisé en ce qu'**il comporte, en outre, une pièce oblongue (2), comportant un perçage axial (5), insérée dans au moins une partie du passage (12) axial du corps (11) et faisant saillie à l'extérieur dudit corps (11) du côté de la partie aval (14) dudit corps (11), ladite pièce oblongue (2) étant libre en rotation par rapport audit corps (1) au sein dudit passage axial (12).

**6.** Raccord selon la revendication 5, **caractérisé en ce que** la pièce oblongue (2) comprend une première extrémité (2a) située à l'intérieur du passage axial (12) du corps (11) et au niveau de la partie amont (13) dudit corps (11), et une seconde extrémité (2b) faisant saillie du côté de la partie aval (14).

**7.** Raccord selon les revendications 5 ou 6, **caractérisé en ce que** la première extrémité (2a) de la pièce oblongue (2) comporte un logement (6) au sein duquel est agencé un joint d'étanchéité (3).

**8.** Raccord selon les revendications 5 à 7, **caractérisé en ce que** la première extrémité (2a) de la pièce oblongue (2) comporte, en outre, un épaulement périphérique (9) venant en butée contre un siège (8) aménagé dans la paroi périphérique interne du passage (12) axial du corps, lorsque la pièce oblongue (2) est positionnée à l'intérieur dudit passage axial (12).

**9.** Raccord selon l'une des revendications 5 à 8, **caractérisé en ce que** la seconde extrémité (2b) de la pièce oblongue (2) faisant saillie du côté de la partie aval (14) comporte un élément ou une portion coudée (20) avec un passage (19) pour le fluide communiquant avec le passage (5) interne de ladite pièce (2).
